# EUROPÄISCHE PATENTSCHRIFT

(11) **EP 0 992 718 B1**
(45) Veröffentlichungstag und Bekanntmachung des Hinweises auf die Patenterteilung: **03.03.2004**
(21) Anmeldenummer: 99115847.8
(22) Anmeldetag: 12.08.1999
(51) Int. Cl.: F16J 15/08, F02F 11/00

(54) **Zylinderkopfdichtung**
Cylinder head gasket
Joint de culasse

(30) Priorität: 01.10.1998 DE 19845320
(43) Veröffentlichungstag der Anmeldung: 12.04.2000
(73) Patentinhaber: Federal-Mogul Sealing Systems GmbH, 57562 Herdorf (DE)
(72) Erfinder: Cierocki, Klaus, Dipl.-Ing., 57562 Herdorf (DE)

(56) Entgegenhaltungen:
- EP-A- 0 701 051
- DE-C- 4 337 758
- DE-C- 19 507 231

## Beschreibung

Die Erfindung betrifft eine Brennkraftmaschine mit einem an einen Motorblock seitlich angeschraubten und von der Zylinderkopfdichtung abgedichteten Gehäuse zur Aufnahme von Antriebsmitteln, wobei zur Abdichtung des Gehäuses am stirnseitigen Endbereich der Zylinderkopfdichtung eine aus elastomerem Werkstoff bestehende elastische Dichtung angeordnet ist, die sich im Einbauzustand in einen Spalt erstreckt, der sich durch Motorblock, Gehäuse und Zylinderkopf toleranzbedingt ergibt.

Aus der DE 195 07 231 C1 ist eine gattungsgemäße Zylinderkopfdichtung zu entnehmen. Zur Abdichtung eines seitlich am Motorblock angeschraubten Gehäuses, z. B. ein Ketten- oder Räderkasten, weist die Zylinderkopfdichtung an ihrem stirnseitigen Endbereich eine elastomere Dichtung auf Im Gegensatz zu vielen üblichen Zylinderkopfichtungen erstreckt sich die zitierte Zylinderkopfdichtung nicht über die axiale Dichtfläche des angeschraubten Gehäuses, sondern lediglich über die Dichtfläche des Motorblocks. Hierdurch wird die Wartungsfreundlichkeit im Hinblick auf Reperaturkosten verbessert, da das Gehäuse separat abgedichtet ist. Die Trennebene zwischen den einzelnen Bauteilen wie Zylinderkopf, Zylinderblock und Gehäuse, ist durch toleranzbedingte Höhenunterschiede nur durch diese Höhenunterschiede ausgleichende Dichtkörper zu gewährleisten. Der durch die Bauteiltoleranzen sich ergebende Spalt ist durch elastische Dichtungen, die sich in den Spalt erstrecken, sicher abzudichten.

Ausgehend von einer nach diesem Prinzip funktionierenden Zylinderkopfdichtung, liegt der Erfindung die Aufgabe zugrunde, eine gattungsgemäße Zylinderkopfdichtung weiter zu verbessern, dahingehend, daß eine einfachere und sichere Verbindung zwischen der Zylinderkopfdichtung und der elastischen Dichtung geschaffen ist.

Diese Aufgabe wird erfindungsgemäß durch die Merkmale des Patentanspruchs 1 gelöst. Vorteilhafte Ausgestaltungen der Erfindung sind in den Unteransprüchen dokumentiert. Metallische Zylinderkopfdichtungen bestehen aus ein- oder mehrlagigen Metallplatten. Diese Platten weisen nur eine geringe Materialdicke auf, so daß die Befestigung einer elastischen Dichtung an der Stirnseite mit Problemen behaftet ist. Durch die erfindungsgemäße Lösung ist eine Befestigung der elastischen Dichtung auf der Oberfläche einer Metallplatte geschaffen, die gleichzeitig die Dichtung gegen Beschädigung während Lagerung und Transport schützt.

Die Erfindung ist in der Zeichnung dargestellt und wird im folgenden näher erläutert. Es zeigen:
- Fig. 1: Ausschnitt in perspektivischer Ansicht einer erfindungsgemäßen Zylinderkopfdichtung am Einbauort.
- Fig. 2: Teilansicht gem. Fig. 1 in der Vergrößerung.
- Fig. 3: Teilansicht gem. Fig. 2 im verformten Zustand.
- Fig. 4: Ausschnitt einer Querschnittsansicht einer Brennkraftmaschine mit eingbauter Zylinderkopfdichtung

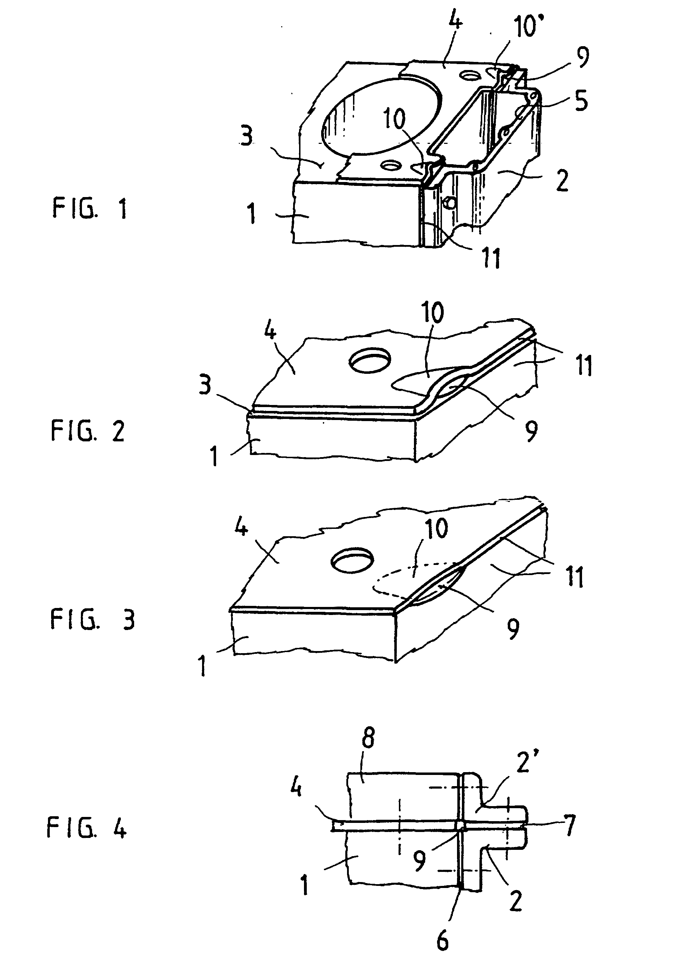

In der Fig. 1 ist in perspektivischer Darstellung die abzudichtende Stelle einer Brennkraftmaschine dargestellt. Seitlich am Motorblock 1 ist ein Gehäuse 2, z.B. ein Ketten- oder Räderkasten, angeschraubt. Zur Abdichtung der Dichtfläche 3 dient eine metallische Zylinderkopfdichtung 4, die aus nur einer Metallplatte oder aus einem Metallplattenkombinat bestehen kann. Die Abdichtung des Gehäuses 2 auf der Oberfläche 5 sowie zum Motorblock 1 erfolgt über separate Dichtungen 6, 7 (Fig. 4). Herstellungsbedingte Toleranzen der einzelnen Bauteile, Motorblock 1, Zylinderkopf 8 und Gehäuse 2, welches aus einem unteren und oberen Teil (2') besteht, rufen einen Spalt im Flanschbereich hervor. Dieser Spalt wird durch eine elastische Dichtung 9 ausgefüllt (Fig. 4). Die elastische Dichtung 9 ist bei der noch nicht verspannten Zylinderkopfdichtung 4, wie in der Figur 2 dargestellt, in der der unteren Dichtfläche 3 zugewandten Oberfläche der Zylinderkopfdichtung 4 eingebrachten Senkung 10, 10' angeordnet. Die Dichtung 9 steht in dieser Lage weder über dem Endbereich 11, noch aus der Oberfläche der Zylinderkopfdichtung 4 nach außen vor. Die geometrische Kontur der Senkung 10, 10' ist so gewählt, daß infolge der Dichtflächenpressung, hervorgerufen durch den Zusammenbau von Motorblock 1 und Zylinderkopf 8, die Senkung 10, 10' derart verformt wird, daß, wie in der Figur 3 dargestellt, die Zylinderkopfdichtung 4 in diesem Bereich nahezu plan gepreßt ist und gleichzeitig die elastische Dichtung 9 zum stirnseitigen Endbereich 11 verdrängt ist.

Auf diese Weise erstreckt sich die Dichtung 9 erst im eingebauten Zustand in den abzudichtenden Spalt und ist während Transport und Lagerung sicher in der Senkung 10, 10' gehalten. Da die Oberfläche der Senkung 10, 10' wesentlich größer ist, als der Endbereich 11, ergibt sich somit auch eine bessere Haftung zwischen Dichtung 9 und Zylinderkopfdichtung 4.

## Patentansprüche

1. Zylinderkopfdichtung (4) für eine Brennkraftmaschine mit einem an einen Motorblock (1) seitlich angeschraubten und von der Zylinderkopfdichtung abgedichteten Gehäuse (2) zur Aufnahme von Antriebsmitteln, wobei zur Abdichtung des Gehäuses am stirnseitigen Endbereich der Zylinderkopfdichtung (4) eine aus elastomerem Werkstoff bestehende elastische Dichtung (9) angeordnet ist, die sich im Einbauzustand in einen Spalt erstreckt, der sich durch Motorblock (1), Gehäuse (2) und Zylinderkopf (8) toleranzbedingt ergibt,
**dadurch gekennzeichnet, daß** am stirnseitigen Endbereich (11) der Zylinderkopfdichtung (4) mindestens eine Senkung (10,10') angeordnet ist, deren Tiefe vom Endbereich (11) radial nach Innen kontinuierlich abnimmt und daß in der Senkung (10,10') die elastische Dichtung (9) aufgenommen ist, ohne über den Endbereich (11) der Zylinderkopfdichtung (4) nach außen vorzustehen, wobei die Senkung (10,10') beim Einbau der Zylinderkopfdichtung (4) infolge der Dichtflächenpressung derart verformbar ist, daß die Dichtung (9) zum stirnseitigen Endbereich (11) verdrängt ist.

2. Zylinderkopfdichtung nach Anspruch 1, **dadurch gekennzeichnet, daß** die Zylinderkopfdichtung (4) aus einem Metallplattenlaminat besteht und die Senkungen (10,10') in einer der Metallplatten angeordnet sind.

3. Zylinderkopfdichtung nach den Ansprüchen 1 und 2, **dadurch gekennzeichnet, daß** das Verhältnis von Tiefe der Senkung (10,10') und Materialstärke der Dichtung (9) so gewählt ist, daß die Dichtung (9) nicht axial aus der Oberfläche der Zylinderkopfdichtung (4) hervorsteht.

4. Zylinderkopfdichtung nach den Ansprüchen 1 bis 3, **dadurch gekennzeichnet, daß** die Dichtung (9) in die Senkung (10,10') eingeklebt ist.

## Claims

1. Cylinder head gasket (4) for an internal combustion engine having a housing (2) to accommodate drive means, said housing being screwed to the side of an engine block (1) and sealed from the cylinder head gasket, a resilient seal (9) consisting of elastomeric material being arranged on the end-face end region of the cylinder head gasket (4) to seal the housing, which seal, when fitted, extends into a gap which arises as a result of tolerances in respect of engine block (1), housing (2) and cylinder head (8), **characterised in that**, at the end-face end region (11) of the cylinder head gasket (4) is arranged at least one depression (10, 10'), the depth of which decreases continuously from the end region (11) radially inwards, and **in that** the resilient seal (9) is accommodated in the depression (10, 10') without protruding outwards beyond the end region (11) of the cylinder head gasket (4), the depression (10, 10') being capable of deformation as the cylinder head gasket (4) is fitted, as a result of the sealing surface pressure, in such a way that the seal (9) is displaced towards the end-face end region (11).

2. Cylinder head gasket according to claim 1, **characterised in that** the cylinder head gasket (4) comprises a metal plate laminate and the depressions (10, 10') are arranged in one of the metal plates.

3. Cylinder head gasket according to claims 1 and 2, **characterised in that** the ratio between the depth of the depression (10, 10') and the thickness of the seal (9) is so selected that the seal (9) does not protrude axially from the surface of the cylinder head gasket (4).

4. Cylinder head gasket according to claims 1 to 3, **characterised in that** the seal (9) is glued into the depression (10, 10').

## Revendications

1. Joint de culasse (4) pour un moteur à combustion interne comprenant un boîtier (2) vissé sur le côté d'un bloc moteur (1) et étanchéifié par le joint de culasse, ledit boîtier (2) servant à la réception de moyens d'entraînement, une garniture d'étanchéité élastique (9) réalisée en un matériau élastomère étant disposée au niveau de la zone d'extrémité frontale du joint de culasse (4) pour étanchéifier le boîtier, ladite garniture d'étanchéité (9) s'étendant à l'état monté dans une fente qui provient des tolérances du bloc moteur (1), du boîtier (2) et de la culasse (8), **caractérisé en ce qu'**au moins une dépression (10, 10') est disposée au niveau de la zone d'extrémité frontale (11) du joint de culasse (4), ladite dépression ayant une profondeur qui diminue de manière continue à partir de la zone d'extrémité (11) radialement vers l'intérieur, la garniture d'étanchéité élastique (9) étant reçue dans la dépression (10, 10') sans faire saillie vers l'extérieur au-delà de la zone d'extrémité (11) du joint de culasse (4), la dépression (10, 10') étant déformable lors du montage du joint de culasse (4) suite à la compression de la surface d'étanchéité de telle sorte que la garniture d'étanchéité (9) est déplacée vers la zone d'extrémité frontale (11).

2. Joint de culasse selon la revendication 1, **caractérisé en ce que** le joint de culasse (4) est réalisé en un laminé de plaques métalliques et les dépressions (10, 10') sont disposées dans une des plaques métalliques.

3. Joint de culasse selon la revendication 1 ou 2, **caractérisé en ce que** le rapport de la profondeur de la dépression (10, 10') et de l'épaisseur de paroi de la garniture d'étanchéité (9) est choisie:de telle sorte que la garniture d'étanchéité (9) ne fait pas saillie axialement hors:de la surface supérieure du joint de culasse (4).

4. Joint de culasse selon la revendication 1, 2 ou 3, **caractérisé en ce que** la garniture d'étanchéité (9) est collée dans la dépression (10, 10').
